Europäisches Patentamt

European Patent Office

Office européen des brevets

(19)

(11) Publication number : **0 464 328 B1**

(12) **EUROPEAN PATENT SPECIFICATION**

(45) Date of publication of patent specification :
13.09.95 Bulletin 95/37

(51) Int. Cl.⁶ : **H04N 5/60**

(21) Application number : **91106080.4**

(22) Date of filing : **17.04.91**

(54) **Multivoice broadcast search method and apparatus in NICAM broadcasting receiver.**

(30) Priority : **30.06.90 KR 9869**

(43) Date of publication of application :
**08.01.92 Bulletin 92/02**

(45) Publication of the grant of the patent :
**13.09.95 Bulletin 95/37**

(84) Designated Contracting States :
**DK ES GB SE**

(56) References cited :
**EP-A- 0 239 760
DE-A- 3 843 451
ELEKTRONIK vol. 39, no. 6, March
1990,MUNICH,DE pages 50 - 56; T. HILPERT ET
AL.: 'DIGITALER MULTISTANDARD-AUDIO-
CHIPSATZ'**

(73) Proprietor : **SAMSUNG ELECTRONICS CO.
LTD.
416 Maetan-Dong,
Kwonsun-ku
Suwon, Kyunggi-do (KR)**

(72) Inventor : **Na, Il-gu
3-406, Miryung,
Apt., 416,
Pisan-dong
Anyang-city, Kyunggi-do (KR)**
Inventor : **Lee, Wu-nyeon
422-204, Jugong Apt.,
Maetan-dong,
Kwonsun-ku
Suwon, Kyunggi-do (KR)**

(74) Representative : **Wilhelm & Dauster
Patentanwälte European Patent Attorneys
Hospitalstrasse 8
D-70174 Stuttgart (DE)**

## Description

Background of the Invention

The present invention relates to a multivoice broadcast search method and the apparatus thereof in a NICAM (Near Instantaneously Contend Audio Multiplexer) broadcasting receiver, particularly within a TV set or a VCR set in European countries.

At present, most of the broadcasting stations have the tendency that they put multivoice stereo broadcasting programs on the air so as to provide a better service to the viewers when they broadcast audio signals. Accordingly, the broadcasting stations add a pilot signal to an audio signal so as to inform the viewers that the present broadcast is, for example, a stereo one or a multivoice one, regardless of a broadcasting format in the multivoice stereo broadcasting system.

Conventionally, an audio signal processing portion in a general TV set or a VCR set is designed so as for a viewer to select any one of final audio outputs. The audio information in an audio left channel which is referred to as L-channel hereinafter and an audio right channel referred to as R-channel hereinafter are not greatly different from each other in case of the stereo music broadcast, but those audio information are different from each other in case of the multivoice broadcast. Thus, the viewer can not know by which kind of language the present broadcasting program is broadcast until he confirms the broadcasting language by selecting either the L-channel or the R-channel when the presently received broadcast is changed from the stereo one to the multivoice.

Especially, the NICAM broadcasting system adopted in England and the northern European countries can broadcast a multivoice broadcast and a stereo one at the same time. The viewer can also select an audio channel among the various audio channels because the NICAM broadcasting system can transmit the respective independent languages (up to three kinds of languages) through one transmitting channel in the course of the multivoice broadcast. For example, the trilingual broadcast can be performed through a normal FM audio channel, a PCM audio L-channel and a PCM audio R-channel in the NICAM multivoice broadcast. That is, in the normal FM audio channel the French language is transmitted, in the NICAM PCM L-channel the English language is transmitted and in the NICAM PCM R-channel the German language is transmitted. These transmissions can be broadcast simultaneously.

Therefore, when the multivoice broadcast is selected by the viewer, it is required to search that the present multivoice broadcast includes an English language, a German language, and a French language so as to select his desired language broadcast with ease.

Such a NICAM broadcasting system is shown in Elektronik, vol. 39, no. 6, March 1990, Munich, DE, pages 50-56; T. Hilpert et al.: "Digitaler Multistandard-Audio-Chipsatz". Particularly this system includes in its receiver part a tuner and demodulator section as well as a NICAM decoder and D/A converter section. Signal transmission is done in this system by a two carrier frequency method, one of the carriers including a pilot signal determining the present operation mode. Possible operation modes are a stereo or a two-language broadcasting mode.

In EP 0 239 760 A2 a multivoice broadcast search method is disclosed in which a user can generate and store a priority list about his preferred languages in an appropriate device of a broadcasting receiver. The broadcasting signals include a recognition signal informing the broadcasting receiver whether the present broadcasting is a multivoice broadcasting and if so, which languages are actually offered. The receiver compares the information of the recognition signal with the priority list stored by the user in advance and selects from the languages currently available the one with the highest priority of the stored list.

SUMMARY OF THE INVENTION

It is an object of the present invention to provide a multivoice broadcast search method for informing a viewer of broadcasting languages in the course of the multivoice broadcast by outputting an audio signal of an L-channel and then the other audio signal of an R-channel, respectively for a predetermined time, and for selecting the viewer's desired language broadcast when the viewer receives the multivoice broadcast.

It is another object of the present invention to provide a multivoice broadcast search apparatus for outputting audio signals in sequence of broadcasting languages A, B and C for a predetermined time when three kinds of broadcasting languages A, B and C are received by a viewer at the same time and then selecting the viewer's desired language broadcast in a multivoice broadcast receiver.

To accomplish the above objects of the present invention, there is provided a multivoice broadcast search apparatus in a NICAM broadcasting receiver having the features of claim 4.

There is also provided a multivoice broadcast search method in a NICAM broadcasting receiver having

EP 0 464 328 B1

the features of claim 1.

## Brief Description of the Drawings

FIG. 1 is a block diagram schematically shown a multivoice broadcast search apparatus in a NICAM broadcasting receiver according to the present invention.

FIG. 2 is a flow chart diagram showing one preferred embodiment of a multivoice broadcast search method in a NICAM broadcasting receiver according to the present invention.

FIG. 3 is a flow chart diagram showing a channel selection process when the present channel is changed to another channel in relation to perform a multivoice broadcast search method according to the present invention.

## Detailed Description of the Preferred Embodiment

A preferred embodiment of the present invention will be described below in detail with reference to the accompanying drawings.

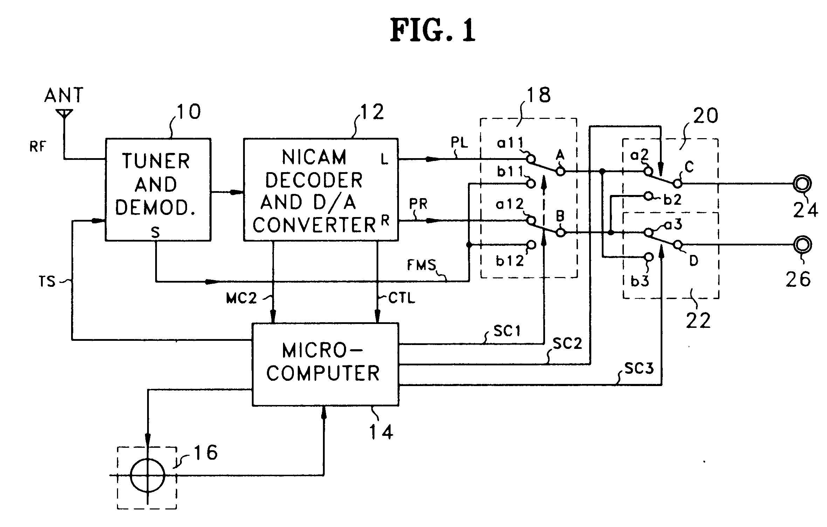

Referring to Fig. 1, a multivoice broadcast search apparatus in a NICAM broadcasting receiver according to the present invention comprises an antenna ANT, a tuner and demodulator 10, a NICAM decoder and D/A converter 12, first to third switching means 18, 20 and 22, a microcomputer 14, a key matrix circuit 16 and output means 24 and 26.

Referring to Fig. 1, the tuner and demodulator 10 receives radio frequency signals RF through the antenna ANT, selects a channel according to a tuning signal TS supplied from the microcomputer 14, supplies NICAM signals to the NICAM decoder and D/A converter 12, and simultaneously demodulates FM modulated signals so as to supply the FM audio signals FMS to the first switching means 18.

Next, the NICAM decoder and D/A converter 12, which will be referred to "NICAM" briefly, decodes the NICAM signals, that is, the NICAM multivoice stereo broadcasting signals supplied from the tuner and demodulator 10, converts the decoded digital signals into analog signals, and supplies the analog signals to the first switching means 18 through a PCM L-channel PL and a PCM R-channel PR, respectively. Here, the NICAM signals, are PCM (pulse code modulation) digital signals transmitted by means of the QPSK (quadrature phase shift keying) system in the broadcasting station.

On the other hand, the NICAM 12 supplies broadcasting state recognition signals MC2 and CTL dependent upon the broadcasting states of the broadcasting signals inputted thereto to the microcomputer 14. Here, one of the broadcasting state recognition signals denoted by "MC2" represents that the present signals processed in the NICAM 12 is multivoice broadcasting signals when a value of "MC2"equals "1", and the other of the broadcasting state recognition signals denoted by "CTL" is a value of the reverse sound switching flag bit and represents that the FM audio signal FMS outputted from the tuner and demodulator 10 is not equal to any one of the PCM L-channel signal PL and the PCM R-channel signal PR when a value of "CTL" equals "0"

The first switching means 18 is composed of first input terminals a11 and a12, second input terminals b11 and b12, and first output terminals A and B. The first input terminals a11 and a12 are connected to each of the output terminals L and R of the NICAM 12 respectively, and the second input terminals b11 and b12 both are connected to the output terminals of the tuner and demodulator 10. The first switching means 18 selects the PCM L-channel signal PL and the PCM R-channel signal PR, or the FM audio signal FMS in accordance with the first switching control signal SC1 supplied from the microcomputer 14, and outputs the selected signals through the first output terminals A and B.

The second switching means 20 includes third input terminals a2 and b2 each connected to the first output terminals A and B, respectively and selects one of the input signals at the third input terminals a2 and b2 in accordance with the second switching control signal SC2 supplied from the microcomputer 14 so as to output the selected signal through the second output terminal C. On the other hand, the third switching means 22 includes fourth input terminals a3 and b3 each connected to the first output terminals A and B, respectively and selects one of the input signals at the fourth input terminals a3 and b3 in accordance with the third switching control signal SC3 supplied form the microcomputer 14 so as to output the selected signal through the third output terminal D. The microcomputer 14 supplies the tuning signal TS to the tuner and demodulator 10 and outputs the switching control signals SC1, SC2 and SC3 to control the first to third switching means 18, 20 and 22 in accordance with the broadcasting state recognition signals MC2 and CTL supplied from the NICAM 12 as described hereinbefore. Accordingly, the microcomputer 14 performs to search a multivoice broadcast of the received channel. Also, the key matrix circuit 16 is connected to the microcomputer 14. The microcomputer 14 supplies scanning pulses to the key matrix circuit 16. Then, if the user presses the desired selection keys such as channel buttons, and so on installed in the key matrix circuit 16, the selected key information is

3

transmitted to the microcomputer 14. Accordingly, the tuning signal TS is transmitted to the tuner and demodulator 10 and the switching control signals SC1, SC2 and SC3 are transmitted to the respective switching means 18, 20 and 22.

An operation of the multivoice broadcast search apparatus having the composition as described above will be described below with reference to Fig. 1, Fig. 2 and Fig. 3. First, it is assumed that a broadcast received in the multivoice broadcast search apparatus of the present invention is changed into a multivoice broadcast from a mono or stereo music broadcast, the English language is transmitted in the PCM L-channel PL, the German language is transmitted in the PCM R-channel PR and the French language is transmitted in the normal FM audio channel.

Now, when the multivoice broadcast as assumed above is received in the multivoice broadcast search apparatus as shown in Fig. 1, the tuner and demodulator 10 demodulates the FM modulated signal. Accordingly, the French language broadcast is supplied to the second input terminals b11 and b12 of the first switching means 18, and simultaneously the NICAM signals are supplied to the NICAM 12. The NICAM 12 decodes the NICAM signals, outputs the broadcasting state recognition signals MC2 and CTL to the microcomputer 14, converts the decoded digital signals into analog signals through the D/A converter, and supplies the English language broadcast in the PCM L-channel PL and the German language broadcast in the PCM R-channel PR to the first input terminals a11 and a12 of the first switching means 18.

Here, the values of the broadcasting state recognition signals MC2 and CTL equal "1" and "0", respectively since the present received broadcast is a multivoice broadcast, and the language in the FM audio channel is not equal to any one of the languages in the PCM L-channel and the PCM R-channel.

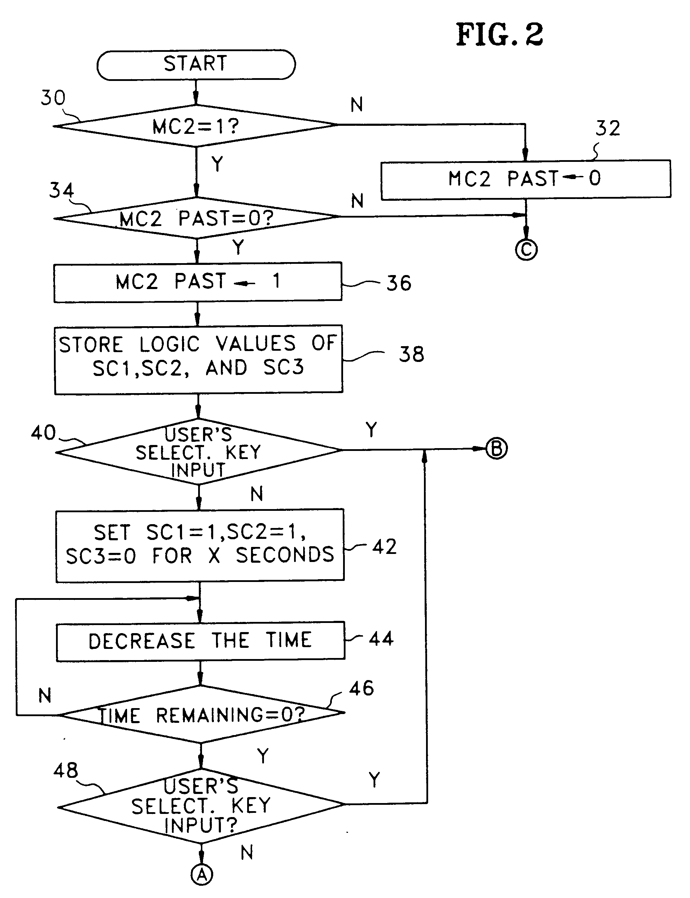

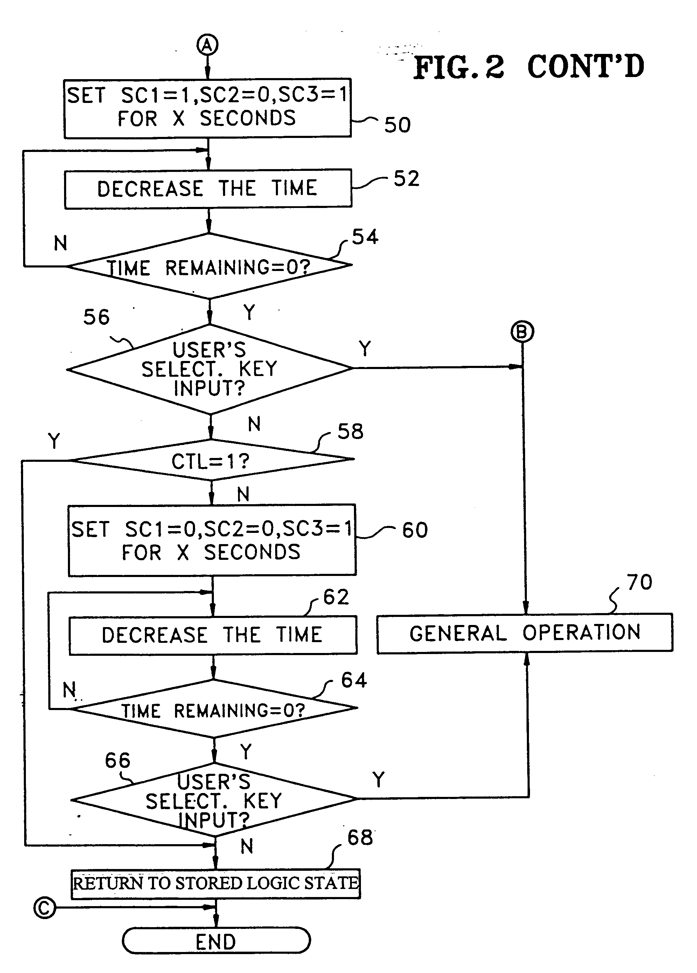

FIG. 2 is a flow chart diagram showing one preferred embodiment of a multivoice broadcast search method in a NICAM broadcasting receiver according to the present invention.

Referring to FIG. 2, the microcomputer 14 determines that the value of the broadcasting state recognition signal MC2 equals "1" at step 30 and the value of the past MC2 equals "0" at step 34, when the present broadcast is changed into the multivoice broadcast from the mono or stereo music broadcast. In this case, the value of the past MC2 equals "0" because the previous broadcast was the mono or stereo music broadcast. Then, the value of the past MC2 is set to "1" at step 36, and the control logic values of the first to third switching means 18, 20 and 22 at step 38 are stored in the microcomputer 14. That is, the logic values of the first to third switching control signals SC1, SC2 and SC3 are stored in the microcomputer 14. Next, at step 40, the microcomputer 14 supplies the scanning pulses to the key matrix circuit 16 and determines if the user's selection key inputs from the key matrix circuit 16 enter the microcomputer 14. Accordingly, if the user selects any control keys in the key matrix circuit 16, a general operation of the NICAM receiver to which the multivoice broadcast search method according to the present invention is applied is performed at step 70 in accordance with the user's selection key inputs. That is, the first to third switching means 18, 20 and 22 are switched over in accordance with the user's selection key inputs through the key matrix circuit 16. On the other hand, if the microcomputer 14 determines that there are no user's selection key inputs from the key matrix circuit 16 at step 40, the microcomputer 14 sets the values of the first to third switching control signals SC1, SC2 and SC3 to "1", "1" and "0", respectively, and holds them for "X"seconds at step 42. That is, the first input terminals a11 and a12 in the first switching means 18 are connected to the first output terminals A and B, respectively for "X" seconds. At the same time, the second and the third output terminal C and D in the second and the third switching means 20 and 22 are connected to one a2 of the third input terminals a2 and b2 and one b3 of the fourth input terminals b3, respectively for "X" seconds. Accordingly, the English language broadcast in the PCM L-channel PL is outputted through the output means 24 and 26. On the other hand, the microcomputer 14 decreases the time of "X" seconds set at step 42 by a predefermined time at step 44, and checks the time remaining equals "0" at step 46. That is, the microcomputer 14 checks the English language broadcast is outputted for "X" seconds at step 46. Thus, at step 44, the microcomputer 14 performs to decrease the set time until the time remaining equals "0" at step 46. If the time remaining equals "0" at step 46, the microcomputer14 determines that the user's selection key information are inputted through the key matrix circuit 16 at step 48. When the user's selection key information are inputted at step 48, the microcomputer 14 goes to step 70 and then instructs the receiver to which the present invention is applied to perform a general operation in accordance with the user's selection key information supplied from the key matrix circuit 16. That is, the first to third switching means 18,20 and 22 are switched over in accordance with the user's selection key information at step 70, and then the user's desired language broadcast among the English, German and French languages is outputted through the output means 24 and 26.

On the other hand, when the user's selection key information are not inputted at step 48, the microcomputer 14 sets the values of the first to third switching control signals SC1, SC2 and SC3 respectively for switching the first to third switching means 18, 20 and 22 to "1", "0" and "1" respectively, and holds them for "X" seconds at step 50.

Accordingly, the first output terminals A and B are connected to the first input terminals a11 and a12, respectively in the first switching means, 18. The second output terminal C is connected to one b2 of the third input terminals a2 and b2 in the second switching means 20, and the third output terminal D is connected to one a3 of the fourth input terminals a3 and b3 for "X" seconds. Thus, the German language broadcast in the PCM R-channel PR is outputted through the output means 24 and 26. Now, the first to third switching control signals SC1, SC2 and SC3 set to the predetermined values and held for "X" seconds are processed in steps 52 and 54 performing a function similar to that of the above-mentioned steps 44 and 46, with the result that the German language broadcast is outputted and held for "X" seconds.

Next, the microcomputer 14 performs the same process as that of the above-mentioned step 40 or 48 at step 56 and proceeds to step 58. At step 58, the microcomputer 14 checks if the broadcasting state recognition signal CTL equals,"1". In the present embodiment, the multivoice broadcast is received in the NICAM receiver for receiving the English, German and French languages which are transmitted in a single channel from the broadcasting station at the same time. Accordingly, the broadcasting state recognition signal is "0" as described above.

This the microcomputer 14 checks that the value of "CTL" is not "1", and proceeds to step 60. At step 60, the microcomputer 14 sets the values of the first to third switching control signals SC1, SC2 and SC3 to "0","0" and "1", respectively, and holds them for "X" seconds. At this time, the first output terminals A and B are connected to the second input terminals b11 and b12, so as to select the French language broadcast in the FM audio channel supplied from the tuner and demodulator 10 to the first switching means 18. The second output terminal C in the second switching means 20 is connected to one b2 of the third input terminals a2 and b2, and the third output terminal D in the third switching means 22 is connected to one a3 of the fourth input terminals a3 and b3. Then, the microcomputer 14 proceeds to steps 62 and 64, and performs the same processes as those of the above-mentioned steps 44 and 46. Accordingly, the French language broadcast is outputted for "X" seconds through the output means 24 and 26. If the time remaining is "0" at step 64, that is, the French language broadcast is outputted and held for "X" seconds, the microcomputer 14 checks if the user's selection key information selected in the key matrix circuit 16 are inputted or not at step 66. When it is determined that the user's selection key information are inputted at step 66, the microcomputer 14 proceeds to step 70 as described above and performs a general operation of the NICAM 70 receiver. If the user's selection key information are not inputted to the microcomputer 14 at step 66, the microcomputer 14 instructs the first to third switching means 18, 20 and 22 to be operated by the first to third switching control signals SC1, SC2 and SC3 stored at step 38, and finishes to perform the multivoice broadcast search operation. On the other hand, if it is determined that the value of "CTL" equals "1" at step 58, at least one of the signals in the PCM L-channel PL and the PCM R-channel PR supplied from the NICAM 12 is equal to the signal in the FM audio channel supplied from the tuner and demodulator 10, thereby the multivoice broadcast search operation is finished.

Also, because the present invention is for confirming what languages are broadcast in the course of receiving the multivoice broadcast, the microcomputer 14 sets the value of the past MC2 to "0" at step 32 and finishes to perform the multivoice broadcast search operation when the state of the present broadcast is not a multivoice broadcast, that is, the value of "MC2" is not "1" at step 30 of Fig. 2. Also, when the value of the past MC2 is not "0" at step 34, the multivoice broadcast search operation is finished.

Therefore, the outputs through the output means 24 and 26 are shown in Table as a result of performing the multivoice broadcast search method when the present broadcast is changed from a stereo music broadcast into a multivoice broadcast.

Table

| output | Output signal for a predetermined time [sec] | | | | |
|--------|-----------------------------|---------|---------|---------|---------------------------|
| means  | 0                           | X secs  | X secs  | X secs  | END                       |
| 24     | stereo L-channel signal     | English | German  | French  | Original Output signal    |
| 26     | stereo R-channel signal     | English | German  | French  | Original Output signal    |

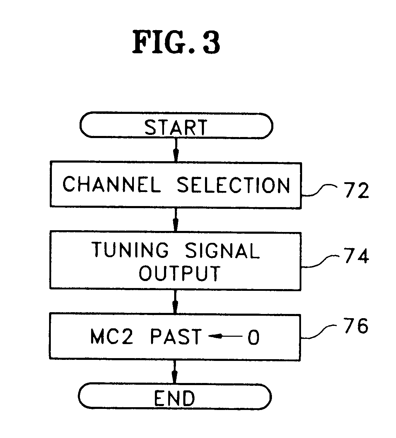

Up to now, the present invention has been described limiting to the case that the present received broadcast is changed from the stereo music broadcast into the multivoice broadcast in the same channel. However, when the user selects another channel, with the result that the broadcast in the selected channel is a multivoice broadcast, the microcomputer 14 performs the channel selection in accordance with a flow chart of Fig. 3 showing a channel selection process in the course of changing the channel.

Referring to FIG. 3, a channel alteration is performed in such a manner that a tuning signal corresponding to the selected channel at step 72 is supplied to the tuner and demodulator 10 at step 74, and the value of the past MC2 is set to "0" at step 76. When the broadcast in the selected channel is a multivoice broadcast, the microcomputer 14 performs a multivoice broadcast search method in accordance with the flow chart of FIG. 2.

Also, when the user powers up the system initially, and the broadcast in the set initial channel is a multivoice broadcast, a multivoice broadcast search method according to the present invention is performed according to the flow chart of FIG. 2.

Also, when a multivoice broadcast is received in the receiver to which the present invention is applied, and then the multivoice broadcast is changed into a mono or stereo music broadcast, and again the mono or stereo music broadcast is changed into the multivoice broadcast, a multivoice broadcast search method is performed in accordance with the flow chart FIG. 2 because the value of the broadcasting state recognition signal MC2 is "1", and the value of the past MC2 is "0".

The multivoice broadcast search method and the apparatus thereof according to the present invention have been described in terms of one preferred embodiment of a NICAM broadcasting receiver, however the present invention is not necessarily limited thereto. For example, it is understood that various changes and modifications in such a manner that the NICAM decoder in the NICAM decoder and D/A converter block of the present invention is modified to decode the other broadcasting signals can be made.

As described above, the present invention outputs the respective language broadcasts in the multivoice broadcast automatically for a predetermined time for the viewer when the received broadcast is a multivoice broadcast. Accordingly, the present invention enables the viewer to select his desired language broadcast with ease without confirming what languages are broadcast by changing-over the broadcasting signal to that of a FM audio channel, a PCM L-channel or a PCM R-channel each time.

## Claims

1.  A multivoice broadcast search method for use in a NICAM broadcasting receiver, characterized by the steps of :
    determining whether the present broadcast is a multivoice broadcast or not, so as to store the present logic values of switching control signals (SC1, SC2, SC3) when the present broadcast is the multivoice broadcast, and to end a multivoice broadcast search operation when the present broadcast is not the multivoice broadcast;
    searching each of language broadcasts of the multivoice broadcast by setting values of said switching control signals (SC1, SC2, SC3), which control switching means (18, 20, 22) provided to select outputting any of the language broadcasts, to predetermined values, holding each of the set control signals for a predetermined time and outputting each of language broadcasting signals sequentially for each of the held times in the course of the multivoice broadcast; and
    returning to the present stored logic values of switching control signals (SC1, SC2, SC3) after performing the multivoice broadcast searching step so as to output a language broadcast according to the stored control signals.

2.  The multivoice broadcast search method as claimed in claim 1, wherein said multivoice broadcast searching process comprises the steps of:
    searching a first language by setting the values of said switching control signals (SC1, SC2, SC3) to the predetermined values, holding the values of the control signals for a predetermined time, and then confirming that a user's selection key information are inputted to a microcomputer (14) through a key matrix circuit (16), with the result that if the user's selection key information are inputted to the microcomputer (14), an operation of the receiver in accordance with the user's selection key information is performed, and if not, a subsequent process is performed;
    searching a second language where the same process as that of said first language searching step is performed, but the values of the switching control signals (SC1, SC2, SC3) set in the microcomputer (14) are different;

EP 0 464 328 B1

checking a number of the broadcasting languages in the multivoice broadcast by confirming the broadcasting state recognition signal (CTL), with the result that if the number of the broadcasting languages is equal to or more than "3", a subsequent process is performed, and if the number of the broadcasting languages is less than "3", the language according to the stored control signals is outputted; and

searching a third language where the same process as that of said first language searching step is performed, but the values of the switching control signals (SC1, SC2, SC3) set in the microcomputer (14) are different, when the number of the languages is equal to or more than "3" in checking said numbers of the broadcasting languages.

3. The multivoice broadcast search method as claimed in claim 1, further comprising the steps of:

supplying a tuning signal (TS) to a tuner and demodulator (10) in accordance with the user's selected channel information received by the microcomputer (14); and

setting a logic value of a past multivoice broadcast recognition signal (MC2 PAST) among broadcasting state recognition signals (MC2), which are supplied by a NICAM decoder and D/A converter (12) according to NICAM signals inputted from a tuner and demodulator (10) to the microcomputer (14), to "0", so as to recognize that the past broadcasting signal before changing the channel is not a multivoice broadcast, whereby it is capable of being applied when a broadcasting state of the user's selected channel in the course of receiving any one of the various broadcasting channels is a multivoice broadcast.

4. A multivoice broadcast search apparatus for use in a NICAM broadcasting receiver comprising:

a tuner and demodulator (10) connected to an antenna (ANT) and for selecting a viewer's desired frequency signal among radio frequency signals (RF) received from the antenna in accordance with a tuning signal (TS) inputted at a tuning signal input terminal, outputting NICAM broadcasting signals and simultaneously demodulating FM modulated signals so as to output FM audio signals;

a NICAM decoder and D/A converter (12) connected to one output terminal of the tuner and demodulator (10) and for decoding the NICAM broadcasting signals outputted from the tuner and demodulator (10) converting the decoded digital signals into analog signals, outputting L-channel signals and R-channel signals;

characterized in that the NICAM decoder and D/A converter (12) simultaneously outputs broadcasting state recognition signals (CTL, MC2) indicative of whether the FM audio signals are equal to one of the L-channel or R-channel signals and whether the present signals processed in the NICAM decoder and D/A converter (12) are multivoice broadcasting signals; said apparatus being further characterized by:

first switching means (18) having first input terminals (a11, a12), at which the L-channel signals and the R-channel signals outputted from the NICAM decoder and D/A converter (12) are inputted, second input terminals (b11, b12) at which the FM audio signals outputted from the tuner and demodulator (10) are inputted and first output terminals (A, B) connected to the first (a11, a12) or the second input terminals (b11, b12) according to a first switching control signal (SC1) and for selecting the L-channel signals and the R-channel signals, or the FM audio signals;

second switching means (20) having third input terminals a2, b2) each connected to one of the first output terminals (A, B) of the first switching means (18), and a second output terminal (C) connected to one of the third input terminals (a2, b2) according to a second switching control signal (SC2) and for selecting a single output;

third switching means (22) having fourth input terminals (a3, b3) each connected to one of the first output terminals (A, B) of the first switching means (18), and a third output terminal (D) connected to one of the fourth input terminals (a3, b3) according to a third switching control signal (SC3) and for selecting a single output;

a microcomputer (14) for supplying said first to third switching control signals (SC1, SC2, SC3) to said first to third switching means (18, 20, 22) according to said broadcasting state recognition signals (CTL, MC2) supplied from the NICAM decoder and D/A converter (12), and outputting said tuning signal (TS) and said first to third switching control signals (SC1, SC2, SC3) according to the viewer's selected signal at a key matrix circuit (16) coupled to said microcomputer (14); and

output means (24, 26) connected to said second output terminal (C) and said third output terminal (D), respectively, for outputting a mono or stereo audio L-channel signal and a mono or stereo audio R-channel signal during a non-multivoice broadcast period, for outputting in sequence the different broadcasting languages for a predetermined time as controlled by said microcomputer (14) via said control signals (SC1, SC2, SC3) during a multivoice broadcast search operation, and for outputting a selected one of the broadcast languages during a multivoice broadcast.

7

**Patentansprüche**

1.  Mehrtonfunkübertragungs-Suchverfahren zur Verwendung in einem NICAM-Funkübertragungsempfänger, gekennzeichnet durch folgende Schritte:

    Feststellen, ob die momentane Funkübertragung eine Mehrtonfunkübertragung ist oder nicht, um die momentanen logischen Werte von Schaltsteuersignalen (SC1, SC2, SC3) abzuspeichern, wenn die momentane Funkübertragung die Mehrtonfunkübertragung ist, und um einen Mehrtonfunkübertragungs-Suchvorgang zu beenden, wenn die momentane Funkübertragung nicht die Mehrtonfunkübertragung ist; Suchen nach jeder der Sprachen-Funkübertragungen der Mehrtonfunkübertragung durch Setzen von Werten der Schaltsteuersignale (SC1, SC2, SC3), welche Schaltmittel (18, 20, 22) steuern, die zum Auswählen der Ausgabe einer jeweiligen der Sprachen-Funkübertragungen vorgesehen sind, auf vorbestimmte Werte, wobei jedes der gesetzten Steuersignale für eine vorbestimmte Zeitdauer gehalten und jedes der Sprachen-Funkübertragungssignale nacheinander für jede der gehaltenen Zeitdauern im Verlauf der Mehrtonfunkübertragung ausgegeben wird; und

    Zurückkehren zu den momentanen gespeicherten logischen Werten der Schaltsteuersignale (SC1, SC2, SC3) nach Durchführen des Mehrtonfunkübertragungs-Suchschrittes, um eine Sprachen-Funkübertragung gemäß den abgespeicherten Steuersignalen auszugeben.

2.  Mehrtonfunkübertragungs-Suchverfahren nach Anspruch 1, wobei der Mehrtonfunkübertragungs-Suchvorgang folgende Schritte beinhaltet:

    Suchen einer ersten Sprache durch Setzen der Werte der Schaltsteuersignale (SC1, SC2, SC3) auf die vorbestimmten Werte, Halten der Werte der Steuersignale für eine vorbestimmte Zeitdauer und dann Bestätigen, daß über eine Tastenfeldschaltung (16) eine Benutzerauswahl-Tasteninformation an einem Mikrocomputer (14) eingegeben wird, mit dem Resultat, daß ein Betrieb des Empfängers gemäß der Benutzerauswahl-Tasteninformation durchgeführt wird, wenn die Benutzerauswahl-Tasteninformation in den Mikrocomputer (14) eingegeben wird, und daß, wenn dies nicht der Fall ist, ein nachfolgender Vorgang durchgeführt wird;

    Suchen einer zweiten Sprache, wobei der gleiche Prozeß wie derjenige des Suchschrittes für die erste Sprache durchgeführt wird, mit der Ausnahme, daß die im Mikrocomputer (14) gesetzten Werte der Schaltsteuersignale (SC1, SC2, SC3) unterschiedlich sind;

    Überprüfen einer Anzahl der übertragenen Sprachen in der Mehrtonfunkübertragung durch Bestätigen des Übertragungszustands-Erkennungssignals (CTL), mit dem Resultat, daß ein nachfolgender Prozeß durchgeführt wird, wenn die Anzahl der übertragenen Sprachen gleich groß oder größer als "3" ist, und daß die Sprache gemäß der abgespeicherten Steuersignale ausgegeben wird, wenn die Anzahl der übertragenen Sprachen kleiner als "3" ist; und

    Suchen einer dritten Sprache, wobei derselbe Prozeß wie derjenige des Suchschrittes für die erste Sprache durchgeführt wird, mit der Ausnahme, daß die in dem Mikrocomputer (14) gesetzten Werte der Schaltsteuersignale (SC1, SC2, SC3) unterschiedlich sind, wenn beim Überprüfen der Anzahl der übertragenen Sprachen die Anzahl der Sprachen gleich oder größer als "3" ist.

3.  Mehrtonfunkübertragungs-Suchverfahren nach Anspruch 1, weiter gekennzeichnet durch folgende Schritte:

    Zuführen eines Einstellsignals (TS) zu einem Tuner und Demodulator (10) gemäß der vom Mikrocomputer (14) empfangenen Information über den vom Benutzer ausgewählten Kanal; und

    Setzen eines logischen Wertes eines alten Mehrtonfunkübertragungs-Erkennungssignals (MC2 ALT) unter den Funkübertragungszustands-Erkennungssignalen (MC2), die von einem NICAM-Decoder und D/A-Wandler (12) gemäß NICAM-Signalen zugeführt werden, die von dem Tuner und Demodulator (10) an dem Mikrocomputer (14) eingegeben werden, auf "0", um zu erkennen, daß das alte Funkübertragungssignal vor Wechseln des Kanals keine Mehrtonfunkübertragung ist, wodurch es anwendbar ist, wenn ein Funkübertragungszustand des vom Benutzer ausgewählten Kanals im Verlauf des Empfangs eines beliebigen der verschiedenen Funkübertragungskanäle eine Mehrtonfunkübertragung ist.

4.  Mehrtonfunkübertragungs-Sucheinrichtung zur Verwendung in einem NICAM-Funkübertragungsempfänger, mit:

    einem Tuner und Demodulator (10), der mit einer Antenne (ANT) verbunden ist und zum Auswählen eines vom Betrachter gewünschten Frequenzsignals unter den von der Antenne empfangenen Radiofrequenzsignalen (RF) gemäß eines Einstellsignals (TS) dient, das an einem Einstellsignaleingangsanschluß eingegeben wird, wobei er NICAM-Funkübertragungssignale abgibt und gleichzeitig FM-modulierte Signale demoduliert, um FM-Tonsignale abzugeben;

einem NICAM-Decoder und D/A-Wandler (12), der mit einem der Ausgangsanschlüsse des Tuners und Demodulators (10) verbunden ist und dazu dient, die vom Tuner und Demodulator (10) abgegebenen NICAM-Funkübertragungssignale zu decodieren, die decodierten digitalen Signale in analoge Signale umzuwandeln und L-Kanal-Signale und R-Kanal-Signale abzugeben;

dadurch gekennzeichnet, daß

der NICAM-Decoder und D/A-Wandler (12) gleichzeitig Funkübertragungszustands-Erkennungssignale (CTL, MC2) abgibt, die anzeigen, ob die FM-Tonsignale einem der L-Kanal- oder R-Kanal-Signale entspricht und ob die momentan im NICAM-Decoder und D/A-Wandler (12) verarbeiteten Signale Mehrtonfunkübertragungssignale sind; wobei die Einrichtung weiter gekennzeichnet ist durch:

erste Schaltmittel (18) mit ersten Eingangsanschlüssen (a11, a12), an denen die vom NICAM-Decoder und D/A-Wandler (12) abgegebenen L-Kanal-Signale und R-Kanal-Signale eingegeben werden, zweiten Eingangsanschlüssen (b11, b12), an denen die vom Tuner und Demodulator (10) abgegebenen FM-Tonsignale eingegeben werden sowie ersten Ausgangsanschlüssen (A, B), die mit den ersten (a11, a12) oder den zweiten Eingangsanschlüssen (b11, b12) gemäß einem ersten Schaltsteuersignal (SC1) verbunden sind, wobei sie dazu dienen, die L-Kanal-Signale und die R-Kanal-Signale oder die FM-Tonsignale auszuwählen;

zweite Schaltmittel (20) mit dritten Eingangsanschlüssen (a2, b2), von denen jeder mit einem der ersten Ausgangsanschlüsse (A, B) der ersten Schaltmittel (18) verbunden ist, und mit einem zweiten Ausgangsanschluß (C), der mit einem der dritten Eingangsanschlüsse (a2, b2) gemäß einem zweiten Schaltsteuersignal (SC2) verbunden ist, wobei sie zum Auswählen eines einzelnen Ausgangssignals dienen;

dritte Schaltmittel (22) mit vierten Eingangsanschlüssen (a3, b3), von denen jeder mit einem der ersten Ausgangsanschlüsse (A, B) der ersten Schaltmittel (18) verbunden ist, und mit einem dritten Ausgangsanschluß (D), der mit einem der vierten Eingangsanschlüsse (a3, b3) gemäß einem dritten Schaltsteuersignal (SC3) verbunden ist, wobei sie zum Auswählen eines einzelnen Ausgangssignals dienen;

einen Mikrocomputer (14) zum Zuführen des ersten bis dritten Schaltsteuersignals (SC1, SC2, SC3) zu den ersten bis dritten Schaltmitteln (18, 20, 22) gemäß den vom NICAM-Decoder und D/A-Wandler (12) zugeführten Funkübertragungszustands-Erkennungssignalen (CTL, MC2) und zum Abgeben des Einstellsignals (TS) sowie des ersten bis dritten Schaltsteuersignals (SC1, SC2, SC3) gemäß einem vom Betrachter an einer mit dem Mikrocomputer (14) gekoppelten Tastenfeldschaltung (16) ausgewählten Signal; und

Ausgabemittel (24, 26), die mit dem zweiten Ausgangsanschluß (C) bzw. dem dritten Ausgangsanschluß (D) verbunden sind, zum Abgeben eines Mono- oder eines Stereoton-L-Kanal-Signals und eines Mono- oder Stereoton-R-Kanal-Signals während einer Nicht-Mehrton-Funkübertragungsperiode, zum Abgeben der verschiedenen Funkübertragungssprachen nacheinander für eine vorbestimmte Zeitdauer unter Steuerung durch den Mikrocomputer (14) über die Steuersignale (SC1, SC2, SC3) während eines Mehrtonfunkübertragungs-Suchvorgangs, und zum Abgeben einer ausgewählten der Funkübertragungssprachen während einer Mehrtonfunkübertragung.

## Revendications

1. Méthode de recherche de diffusions multisons, utilisée dans un récepteur de diffusions NICAM, caractérisée en ce qu'elle comprend les étapes suivantes:

   - détection si la diffusion actuellement reçue est une diffusion multisons ou non, de façon à stocker les valeurs logiques actuelles des signaux de commande de commutation (SC1, SC2, SC3) s'il s'agit d'une diffusion multisons, et de façon à abandonner l'opération de recherche de diffusions multisons s'il ne s'agit pas d'une diffusion multisons;

   - recherche de chacune des langues diffusées au sein de la diffusion multisons en affectant d'abord des valeurs prédéterminées auxdits signaux de commande de commutation (SC1, SC2, SC3) qui commandent à leur tour des moyens de commutation (18, 20, 22) permettant de restituer à la sortie chacune des langues diffusées, en maintenant ensuite lesdits signaux de commande de commutation pendant un temps prédéterminé à leurs valeurs affectées, et en restituant enfin à la sortie chacune des langues diffusées de manière séquentielle pendant ledit temps de maintien prédéterminé durant une diffusion multisons, et

   - remise des signaux de commande de commutation (SC1, SC2, SC3) après l'opération de recherche au sein d'une diffusion multisons aux valeurs précédemment stockées, de façon à restituer à la sortie la langue définie par les signaux logiques stockés.

**2.** Méthode de recherche de diffusions multisons selon la revendication 1, dans laquelle ledit processus de recherche de diffusions multisons comprend les étapes suivantes:

- recherche d'une première langue diffusée en affectant des valeurs prédéterminées auxdits signaux de commande de commutation (SC1, SC2, SC3), en maintenant lesdits signaux de commutation pendant un temps prédéterminé à leur valeurs affectées, et en vérifiant enfin si l'utilisateur a introduit au moyen d'un clavier et via un circuit de clavier à matrice (16) une information de sélection dans un micro-ordinateur (14), cette information de sélection de la part de l'utilisateur provoquant dans le récepteur une opération conforme à cette sélection, ou provoquant un autre processus subséquent, si elle est absente;
- recherche d'une seconde langue en effectuant le même processus que celui décrit pour ladite première langue, mais en affectant auxdits signaux de commande de commutation (SC1, SC2, SC3) dans le micro-ordinateur (14) des valeurs différentes;
- vérification du nombre de langues diffusées au sein de la diffusion multisons en analysant le signal de reconnaissance d'état de la diffusion (CTL) afin d'effectuer un processus subséquent si le nombre de langues diffusées est égal ou supérieur à trois, ou afin de restituer à la sortie la langue correspondant aux valeurs stockées des signaux de commutation si le nombre de langues diffusées est inférieur à trois; et
- recherche d'une troisième langue en effectuant le même processus que celui décrit pour ladite première langue, mais en affectant auxdits signaux de commande de commutation (SC1, SC2, SC3) dans le micro-ordinateur (14) des valeurs différentes si l'analyse du nombre de langues diffusées a donné un résultat égal ou supérieur à trois.

**3.** Méthode de recherche de diffusions multisons selon la revendication 1, comprenant en outre les étapes suivantes:

- fourniture d'un signal d'accord (TS) vers un syntoniseur et démodulateur (10) conformément à l'information de sélection de voie reçue par le micro-ordinateur (14) de la part de l'utilisateur ; et
- mise à la valeur logique "0" d'un signal antérieur de reconnaissance de diffusion multisons (MC 2 PAST) au sein des signaux de reconnaissance d'état de la diffusion (MC2) qui sont fournis par le décodeur NICAM et convertisseur numérique/analogique (12) en fonction des signaux NICAM provenant du syntoniseur et décodeur (10) vers le micro-ordinateur (14), de façon à reconnaître que le signal diffusé avant le changement de voie n'était pas une diffusion multisons, et afin de pouvoir l'appliquer si l'état de la diffusion d'une voie choisie par l'utilisateur au cours de la réception de différentes voies diffusées est celui d'une diffusion multisons.

**4.** Appareil de recherche de diffusions multisons pour être utilisé dans un récepteur de diffusions NICAM, comprenant:

- un syntoniseur et décodeur (10), relié à une antenne (ANT), pour choisir parmi les signaux à radiofréquence (RF) captés par l'antenne celui que souhaite le spectateur et qui est conforme à un signal d'accord (TS) introduit dans une borne d'entrée pour ce signal d'accord, et pour délivrer des signaux de diffusion NICAM et pour démoduler simultanément des signaux modulés en fréquence (FM) afin de délivrer des signaux audio FM;
- un décodeur NICAM et convertisseur numérique/analogique (12), relié à une borne de sortie du syntoniseur et démodulateur (10), pour décoder les signaux de diffusion NICAM délivrés par le syntoniseur et démodulateur (10), et pour convertir les signaux numériques décodés en signaux analogiques, et pour délivrer des signaux de la voie gauche (L) et droite (R);

caractérisé en ce que

- le décodeur NICAM et convertisseur numérique/analogique (12) délivrent simultanément des signaux de reconnaissance de l'état de la diffusion (CTL, MC2) qui indiquent si les signaux audio FM sont égaux à l'un des signaux de voie gauche (L) ou droite (R), ou si les signaux actuellement traités par le décodeur NICAM et convertisseur numérique/analogique (12) sont des signaux de diffusion multisons;

ledit appareil étant en outre caractérisé en ce qu'il dispose

- de premiers moyens de commutation (18) ayant des premières bornes d'entrée (a11, a12) auxquelles sont appliqués les signaux de la voie gauche (L) et droite (R) provenant du décodeur NICAM et convertisseur numérique/analogique (12), des secondes bornes d'entrée (b11, b12) auxquelles sont appliqués les signaux audio FM provenant du syntoniseur et démodulateur (10), et des premières bornes de sortie (A, B), reliées soit aux premières (a11, a12), soit aux secondes (b11, b12) bornes d'entrée en fonction d'un premier signal de commande de commutation (SC1), afin de sélectionner soit les signaux de la voie gauche (L) et droite (R), soit les signaux audio FM;
- de seconds moyens de commutation (20) ayant des troisièmes bornes d'entrée (a2, b2), reliées chacune à l'une des premières bornes de sortie (A, B) des premiers moyens de commutation (18), et une seconde borne de sortie (C), reliée à l'une des troisièmes bornes d'entrée (a2, b2) en fonction d'un second signal de commande de commutation (SC2), afin de sélectionner une seule sortie;
- de troisièmes moyens de commutation (22) ayant des quatrièmes bornes d'entrée (a3, b3), reliées chacune à l'une des premières bornes de sortie (A, B) des premiers moyens de commutation (18), et une troisième borne de sortie (D), reliée à l'une des quatrièmes bornes d'entrée (a3, b3) en fonction d'un troisième signal de commande de commutation (SC3), afin de sélectionner une seule sortie;
- d'un micro-ordinateur (14) pour fournir lesdits premiers à troisièmes signaux de commande de commutation (SC1, SC2, SC3) auxdits premiers à troisièmes moyens de commutation (18, 20, 22) en fonction desdits signaux de reconnaissance de l'état de la diffusion (CTL, MC2) fournis par le décodeur NICAM et convertisseur numérique/analogique (12), et pour restituer à la sortie ledit signal d'accord (TS) et lesdits premiers à troisièmes signaux de commande de commutation (SC1, SC2, SC3) en fonction du choix introduit par l'utilisateur dans le circuit de clavier à matrice (16), relié à son tour audit micro-ordinateur (14);
- de moyens de sortie (24, 26), reliés respectivement à ladite seconde borne de sortie (C) et à ladite troisième borne de sortie (D), afin de restituer à la sortie un signal mono ou stéréo voie gauche (L), ainsi qu'un signal mono ou stéréo voie droite (R) durant les diffusions non-multisons, et afin de restituer à la sortie de manière séquentielle les différentes langues diffusées pendant un temps prédéterminé en fonction desdits signaux de commande de commutation (SC1, SC2, SC3) délivrés par ledit micro-ordinateur (14) durant une recherche de diffusion multisons, et afin de restituer à la sortie une les langues sélectionnées durant une diffusion multisons.

FIG. 1

# FIG. 2

```
                    ┌──────────────┐
                    │    START     │
                    └──────────────┘
                            │
  30                        ▼                    N
        ◇────────────── MC2=1? ──────────────────────────┐
                            │ Y                           │
                            │                             ▼
                            │                      ┌──────────────┐   32
  34                        ▼              N       │  MC2 PAST ← 0 │
        ◇──────── MC2 PAST=0? ─────────────────┐   └──────────────┘
                            │ Y                 │          │
                            │                   ▼          │
                            │                   Ⓒ◄─────────┘
                            ▼
              ┌──────────────────────────┐   36
              │      MC2 PAST ← 1         │
              └──────────────────────────┘
                            │
                            ▼
              ┌──────────────────────────┐   38
              │  STORE LOGIC VALUES OF    │
              │  SC1, SC2, AND SC3        │
              └──────────────────────────┘
                            │
  40                        ▼              Y
        ◇──────── USER'S SELECT. KEY INPUT ──────────────►Ⓑ
                            │ N
                            ▼
              ┌──────────────────────────┐   42
              │  SET SC1=1, SC2=1,        │
              │  SC3=0 FOR X SECONDS      │
              └──────────────────────────┘
                            │
              ┌────────────►│
              │             ▼
              │  ┌──────────────────────────┐   44
              │  │  DECREASE THE TIME        │
              │  └──────────────────────────┘
              │             │
         N    │             ▼
              └──────◇ TIME REMAINING=0? ─────   46
                            │ Y
  48                        ▼              Y
        ◇──────── USER'S SELECT. KEY INPUT? ──────────────┘
                            │ N
                            ▼
                            Ⓐ
```

**FIG.2 CONT'D**

Ⓐ

SET SC1=1,SC2=0,SC3=1 FOR X SECONDS — 50

DECREASE THE TIME — 52

TIME REMAINING=0? — 54   N

Y

USER'S SELECT. KEY INPUT? — 56   Y ──→ Ⓑ

N

CTL=1? — 58   Y

N

SET SC1=0,SC2=0,SC3=1 FOR X SECONDS — 60

DECREASE THE TIME — 62

TIME REMAINING=0? — 64   N

Y

USER'S SELECT. KEY INPUT? — 66   Y

N

RETURN TO STORED LOGIC STATE — 68

Ⓒ

END

GENERAL OPERATION — 70

# FIG. 3

EP 0 464 328 B1

```
        ┌─────────────┐
        │    START    │
        └──────┬──────┘
               │
               ▼
   ┌────────────────────────┐
   │  CHANNEL  SELECTION    │────72
   └───────────┬────────────┘
               │
               ▼
   ┌────────────────────────┐
   │    TUNING  SIGNAL       │────74
   │       OUTPUT           │
   └───────────┬────────────┘
               │
               ▼
   ┌────────────────────────┐
   │   MC2  PAST ◄─── 0      │────76
   └───────────┬────────────┘
               │
               ▼
        ┌─────────────┐
        │     END     │
        └─────────────┘
```